**Europäisches Patentamt**

**European Patent Office**

**Office européen des brevets**

(19)

(11) Numéro de publication : **0 343 141 B1**

(12)

# FASCICULE DE BREVET EUROPEEN

(45) Date de publication du fascicule du brevet :
**27.01.93 Bulletin 93/04**

(51) Int. Cl.⁵ : **A47J 37/12,** A47J 36/38,
F24C 15/20

(21) Numéro de dépôt : **89870066.1**

(22) Date de dépôt : **16.05.89**

(54) **Appareil de cuisson d'aliments.**

(30) Priorité : **17.05.88 BE 8800543**

(43) Date de publication de la demande :
**23.11.89 Bulletin 89/47**

(45) Mention de la délivrance du brevet :
**27.01.93 Bulletin 93/04**

(84) Etats contractants désignés :
**BE DE ES FR GB IT NL**

(56) Documents cités :
**EP-A- 0 150 516**
**FR-A- 2 289 144**
**US-A- 2 753 436**
**US-A- 3 514 577**
**US-A- 3 828 760**

(73) Titulaire : **NOVA ELECTRO INTERNATIONAL
N.V.
Overhaamlaan 44
B-3700 Tongeren (BE)**

(72) Inventeur : **Boyen, Lodewijk Jozef Theofiel
Drève de Waroux, 1
B-4430 Alleur (BE)**

(74) Mandataire : **Vanderperre, Robert et al
Bureau Vander Haeghen S.A. Rue Colonel
Bourg 108 A
B-1040 Bruxelles (BE)**

EP 0 343 141 B1

Jouve, 18, rue Saint-Denis, 75001 PARIS

## Description

La présente invention est relative à un appareil de cuisson d'aliments, en particulier à un appareil électrique de cuisson du type comprenant une cuve destinée à contenir les aliments à cuire dans un liquide et munie d'un couvercle, et des moyens pour établir un courant d'air entre un orifice d'entrée et un orifice de sortie que présente l'appareil.

On connaît par le brevet belge 901.573 un appareil de cuisson électrique, en particulier une friteuse du type indiqué dans le paragraphe précédent.

Un inconvénient de cet appareil de cuisson connu réside dans le fait que les moyens pour établir un courant d'air entre le ou les orifices d'entrée et de sortie précités favorisent l'évacuation des fumées hors de la cuve, sans refroidir notablement les parois du couvercle de l'appareil de cuisson.

Dans cet appareil de cuisson domestique connu, l'air se mélange aux fumées dans la cuve elle-même en provoquant des turbulences, ce qui a pour effet de diminuer la température du liquide de cuisson et de provoquer la condensation de vapeur d'eau contenue dans les fumées, en sorte que des gouttes d'eau tombent dans la cuve.

Le document US-A- 3, 828,760 décrit un appareil de cuisson d'aliments où une chambre est prévue entre une paroi interne et une paroi externe du couvercle de la cuve de l'appareil pour isoler le moteur-ventilateur de l'air chaud qui se trouve dans la cuve.

La présente invention vise à remédier à ces inconvénients.

L'invention a pour objet un appareil de cuisson d'aliments du type décrit dans le premier paragraphe du présent mémoire, cet appareil étant essentiellement caractérisé en ce que le couvercle présente deux parois entre lesquelles est ménagée une chambre, lesdits moyens établissant au moins un courant d'air depuis un orifice d'entrée jusqu'à un orifice de sortie de cette chambre de manière à abaisser la température du couvercle.

Selon une particularité de l'invention, pour un appareil comprenant une enveloppe entourant les parois laterales et le fond de la cuve, cette enveloppe étant écartée de ladite cuve, de manière à définir une chambre entre la paroi de l'enveloppe et la paroi latérale de la cuve, la chambre définie entre la cuve et l'enveloppe et qui communique par au moins un orifice intermédiaire avec une seconde chambre délimitée par deux parois du couvercle écartées l'une de l'autre, les moyens établissant un courant d'air dans lesdites chambres.

Dans une forme de réalisation de l'appareil suivant l'invention, au moins un orifice de sortie est prévu dans le couvercle.

Dans des formes de réalisation, des chicanes sont prévues entre deux parois d'une chambre et au moins une paroi d'une chambre est munie d'ailettes.

L'appareil suivant l'invention peut comporter, de manière connue, un regard prévu, de préférence, dans son couvercle, ce regard présentant un bord d'amont et un bord d'aval opposés l'un à l'autre.

Dans une forme de réalisation de l'invention pour un tel appareil, au moins un orifice d'entrée d'air dans la cuve est prévu au voisinage du bord d'amont du regard, tandis qu'au moins un orifice d'évacuation de cet air est ménagé au voisinage du bord d'aval de ce regard, de sorte que, sous l'effet des moyens d'établissement d'un courant d'air, une couche d'air se déplace sur la face du regard qui est dirigée vers la cuve.

De préférence, le regard est porté par une paroi interne du couvercle écartée d'une paroi externe de ce couvercle, de telle sorte qu'une chambre est ménagée dans ce couvercle entre ses parois externe et interne, le ou les orifices de sortie de l'air introduit dans la cuve étant ménagés dans la paroi interne du couvercle.

D'autres particularités et détails de l'invention ressortiront de la description détaillée suivante dans laquelle il est fait référence aux dessins ci-annexés dans lesquels :

- la figure 1 montre une première forme de réalisation d'un appareil suivant l'invention partiellement en coupe transversale ;
- la figure 2 est une vue similaire à la figure 1 d'une deuxième forme de réalisation d'un appareil suivant l'invention ;
- la figure 3 est une vue en coupe transversale semblable à celle de la figure 2 montrant une troisième forme de réalisation d'un appareil suivant l'invention ;
- les figures 4 et 5 montrent respectivement en coupe transversale et en perspective avec coupe partielle une quatrième forme de réalisation d'un appareil suivant l'invention muni d'un couvercle à regard, et
- la figure 6 est une vue d'une cinquième forme de réalisation similaire à celle représentée à la figure 2.

Dans ces différentes figures, les mêmes notations de référence désignent des éléments identiques ou similaires.

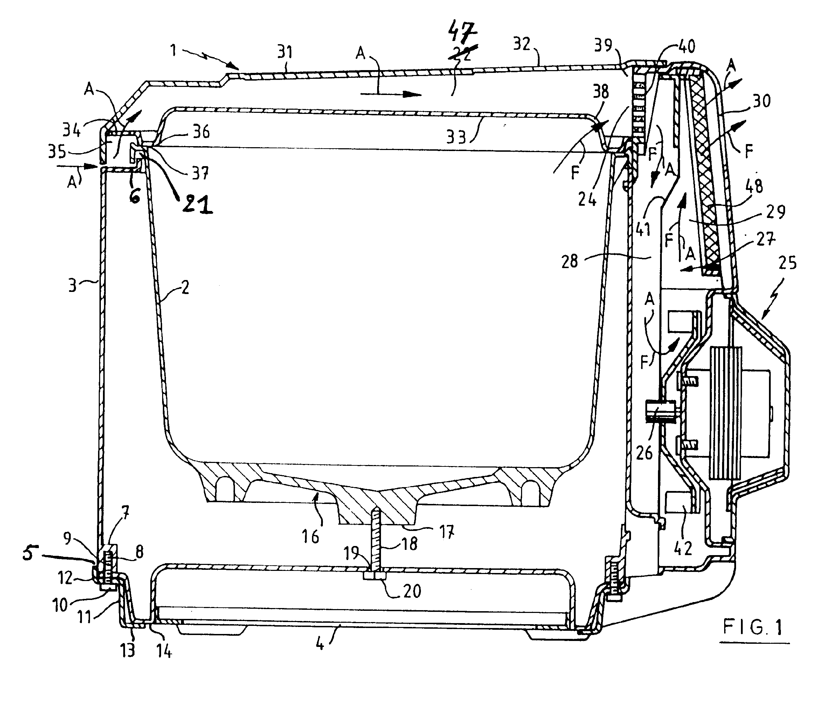

La figure 1 montre en coupe transversale un appareil de cuisson 1. Cet appareil 1 comprend une cuve 2 destinée à contenir des aliments à cuire dans un liquide. Un tel appareil 1 est, par exemple, une friteuse, c'est-à-dire un appareil destiné à la cuisson d'aliments dans de l'huile ou de la graisse fondue.

Cet appareil 1 comprend également une enveloppe 3 qui entoure la cuve 2 et un fond 4. L'enveloppe 3 présente, à une (5) de ses extrémités 5,6 un bourrelet 7 présentant des évidements taraudés 8 destinés à livrer passage à une tige filetée 9 de vis 10. Ces vis 10 permettent de solidariser une pièce de liaison 11, de ladite enveloppe 3. Cette pièce de liaison 11 a la forme d'un profilé dont une première aile 12 est destinée à la fixation de la pièce de liaison 11 à l'enveloppe 3, tandis que la seconde aile 13 dudit profilé est destiné à prendre appui sur une face inférieure 14 du fond 4.

La cuve 2 est solidaire, à sa partie inférieure 15, d'un plateau 16 muni d'une protubérance centrale 17. Cette protubérance 17 porte une tige filetée 18 qui traverse un orifice 19 ménagé dans le fond 4. Un écrou 20 vissé sur la tige 18 et prenant appui sur le fond 4 permet de rendre solidaire entre eux la cuve 2, l'enveloppe 3 et le fond 4. Cette solidarisation est obtenue grâce à l'emboitement de l'extrémité 6 de l'enveloppe dans une gorge 21 que présente la cuve 2, lors du serrage de l'écrou 20 sur la tige filetée 18.

L'appareil 1 est muni d'un couvercle 31 qui est articulé à l'enveloppe 3. Ce couvercle 31 comporte une paroi externe 32 et une paroi interne 33 entre lesquelles s'étend une chambre 47.

Le couvercle 31 présente un orifice de sortie 24 et un orifice d'entrée d'air 34 situé dans une rainure 35 adjacente à un rebord 36 de la paroi interne 33, ce rebord 36 étant destiné à prendre appui sur un bord supérieur 37 de la cuve 2, lorsque le couvercle 31 est fermé.

Les moyens 25 permettent d'établir un courant d'air (flèche A) entre le ou les orifices d'entrée 23 et de sortie 24 de la chambre 47. Ce courant d'air A se charge de calories et abaisse la température du couvercle 31.

Les moyens 25 destinés à la circulation de l'air dans l'espace 22 ou dans une partie de celui-ci sont constitués par un ventilateur 26 monté dans un conduit 27. Dans la forme représentée à la figure 1, le ventilateur 26 commandé par un moteur électrique aspire l'air se trouvant dans la chambre 47. Il est évident que ce ventilateur pourrait souffler de l'air dans la chambre 47 ou dans une partie de celle-ci au lieu de l'aspirer.

Le conduit 27 comprend deux parties adjacentes et sensiblement parallèles 28,29, la partie 28 reliant l'orifice de sortie 24 ménagé dans le couvercle 31 au ventilateur 26, tandis que la partie 29 du conduit 27 présente une sortie 30 pour évacuer l'air aspiré par le ventilateur 26 vers le milieu extérieur.

Dans la forme de réalisation montrée à la figure 1, la paroi interne 33 du couvercle 31 présente une ouverture 38 de manière à permettre aux moyens 25 d'aspirer des fumées (flèche F) dégagées dans la cuve 2 lors de la cuisson d'aliments.

A l'entrée 39 du conduit 27, un filtre 40 peut être monté, ce filtre 40 étant destiné à retenir des gouttelettes ou particules d'huile ou de graisse emportées par les fumées (F), de manière à empêcher que ces particules se déposent sur des parois 41 dudit conduit 27 ou sur des pales 42 du ventilateur 26.

Enfin le conduit 27 est muni d'un filtre 48 au voisinage de sa sortie 30, par laquelle sont évacués l'air (A) et les fumées (F) aspirés par le ventilateur 26.

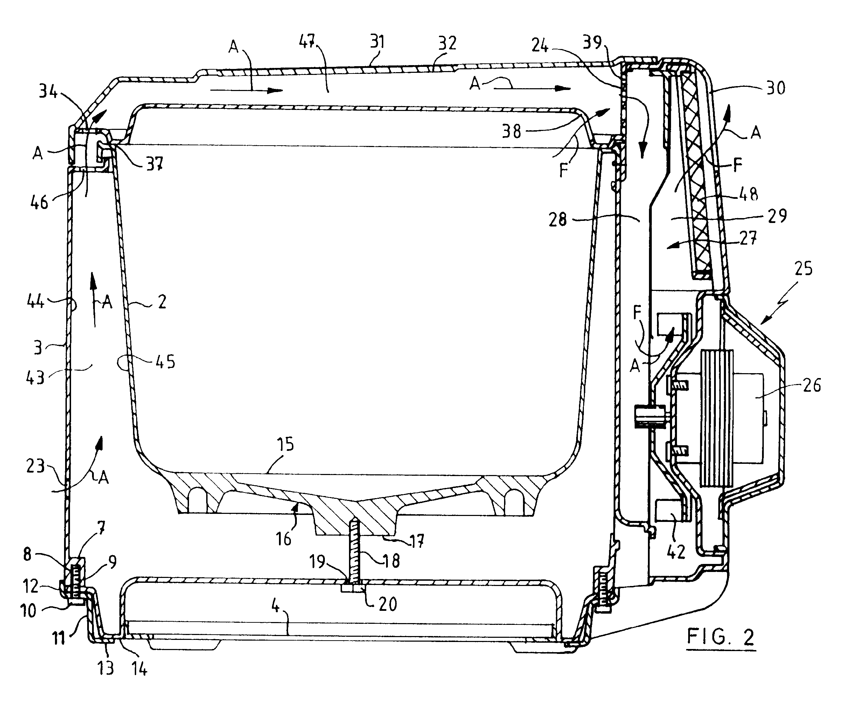

La figure 2 montre une deuxième forme de réalisation d'un appareil de cuisson suivant l'invention, similaire à celle représentée à la figure 1.

Dans cette deuxième forme de réalisation, l'enveloppe 3 présente un orifice ou, de préférence, plusieurs orifices 23 d'entrée d'air dans une première chambre 43, cette première chambre 43 étant délimitée par les parois latérales 44,45 de la cuve 2 et de l'enveloppe 3.

L'air entrant par les orifices 23 dans cette chambre 43 est ensuite amené à passer par un orifice intermédiaire 46 ménagé dans l'enveloppe 3, au voisinage du bord 37 de la cuve 2.

Le couvercle 31 présente un orifice d'entrée 34 adjacent à l'orifice intermédiaire 46, de sorte que la chambre 43 est en communication avec une deuxième chambre 47 situé entre une paroi externe 32 et une paroi interne 33 du couvercle 31.

L'air entrant dans cette deuxième chambre 47 et les fumées sont aspirés par les moyens 25, de la manière décrite pour l'appareil représenté à la figure 1. Toutefois, le conduit 27 n'est pas muni d'un filtre au voisinage de son entrée 39.

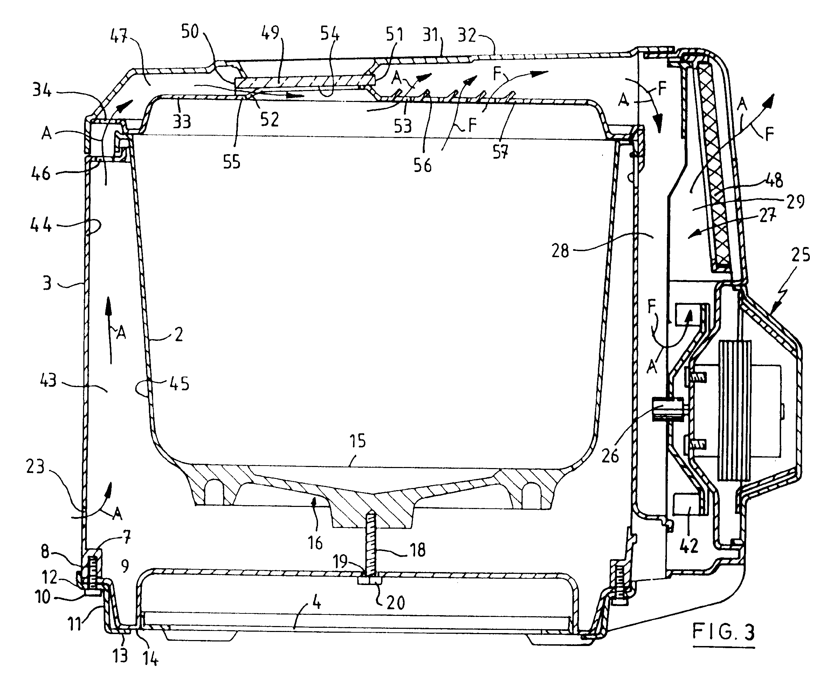

La figure 3 est une vue d'un appareil suivant l'invention similaire à celui représenté à la figure 2.

Il se différencie toutefois de celui-ci par la conception de son couvercle 31.

Ce couvercle 31 est muni d'un regard 49 présentant un bord d'amont 50 et un bord d'aval 51 opposés l'un à l'autre. Ce regard est réalisé en une matière transparente, de manière à permettre à un utilisateur de se rendre compte du degré de cuisson des aliments dans la cuve sans devoir ouvrir le couvercle 31.

Le regard 49 est porté par la paroi interne 33 du couvercle 31 et est, de préférence, coincé entre les parois interne 33 et externe 32 de ce couvercle 31, ces parois 32,33 étant écartées l'une de l'autre, de manière à former une chambre 47.

Au moins un orifice 52 d'entrée d'air dans la cuve 2 est prévu au voisinage du bord d'amont 50 du regard 49, tandis qu'au moins un orifice d'évacuation 53 de cet air est ménagé au voisinage du bord d'aval 51 du regard 49. Ainsi, sous l'effet des moyens 25, un courant d'air (flèches A) est établi au voisinage de la face 54 du regard

EP 0 343 141 B1

49, qui est dirigée vers la cuve 2, de sorte qu'une couche ou un film d'air se déplace sur cette face 54 du regard 49. Cette couche d'air ou ce film d'air empêche les fumées de venir en contact avec cette face 54 du regard 49 et évite ainsi le dépôt de particules ou gouttelettes d'huile ou de graisse ou la formation de buées sur la face 54 du regard 49.

De préférence, au moins un déflecteur 55 est prévu au voisinage du bord d'amont 50 du regard 49, du côté de la face 54 de celui-ci, qui est dirigée vers la cuve 2, de manière à amener l'air entrant par le ou les orifices d'entrée 52 susdits en contact avec ladite face 54.

Ainsi, à tout moment de la cuisson, il est possible de se rendre compte du degré de cuisson de l'aliment sans devoir ouvrir le couvercle 31.

De façon avantageuse, plusieurs orifices de sortie 57 de l'air introduit dans la cuve 2 sont ménagés dans la paroi interne 33 du couvercle 31. Ces orifices 53 sont munis d'au moins un volet 56 dirigeant l'air vers la paroi externe 32 du couvercle 31. Ces volets 56 dirigent également l'air vers l'entrée 39 du conduit d'aspiration 27 dans lequel est monté le ventilateur 26.

Ces orifices 57 permettent également aux moyens 25 d'aspirer les fumées (F) produites lors de la cuisson d'aliments.

Dans cette troisième forme de réalisation de l'appareil, illustrée à la figure 3, l'air entrant dans la cuve 2 est guidé dans une direction sensiblement parallèle au regard 49, en évitant ainsi de créer des turbulences de l'air dans la cuve 2 ou de créer un mouvement de l'air vers la surface du liquide de cuisson ou vers les aliments à cuire.

Le fait que les turbulences de l'air entrant dans la cuve 2 sont évitées permet de diminuer au maximum un mélange de l'air et des fumées présents dans la cuve 2 et permet donc de ne pas abaisser, de façon trop importante, la température des fumées dans la cuve 2. De cette manière, on évite au maximum la condensation de l'eau contenue dans les fumées et, ainsi, la chute de gouttelettes d'eau dans le liquide de cuisson. Cette chute de gouttelettes provoque, lorsque le liquide de cuisson est de l'huile ou une graisse fondue, une projection de gouttelettes d'huile ou de graisse accompagnée d'un crépitement important.

Dans la troisième forme de réalisation de l'appareil de cuisson suivant l'invention représentée à la figure 3, tout l'air entrant dans la cuve 2 est sensiblement aspiré par l'orifice 53 grâce aux moyens 25 et est amené à lécher la paroi externe 32 du couvercle 31. De manière avantageuse, les déflecteurs 56 sont agencés de manière à ne pas créer de turbulences dans la chambre 47.

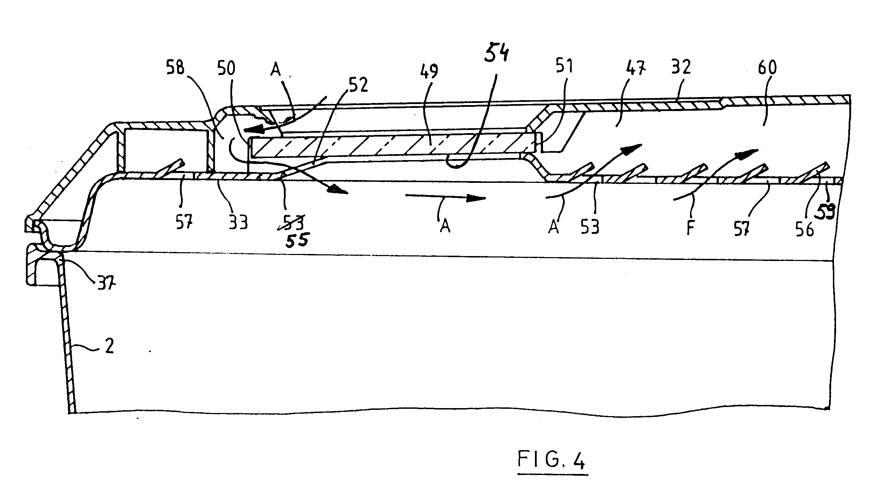

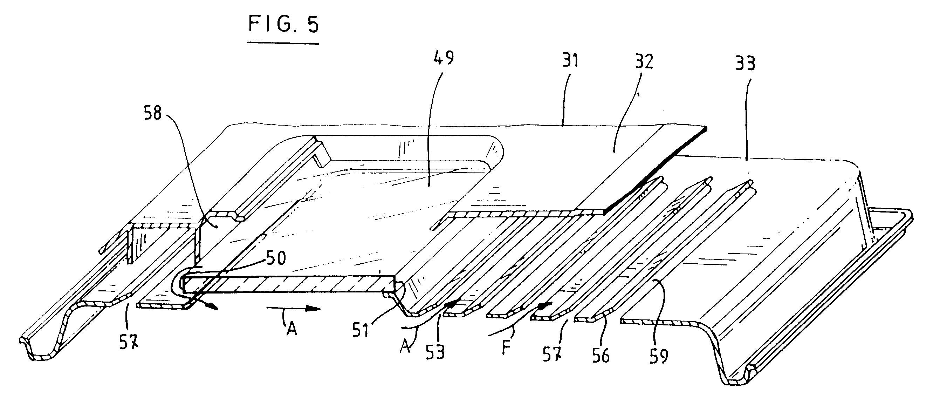

Les figures 4 et 5 montrent, en coupe transversale et en perspective avec coupe partielle, une partie d'un appareil suivant l'invention, plus particulièrement d'un couvercle 31 d'un appareil suivant l'invention.

Ce couvercle 31 est similaire à celui représenté à la figure 3. Toutefois, l'air (flèches A) entrant dans la cuve 2 par l'orifice 52 adjacent au bord d'amont 50 du regard 49 provient d'un canal 58 s'étendant entre la paroi interne 33 et la paroi externe 32 du couvercle 31.

L'air entrant dans la cuve 2 est amené à lécher une face 54 du regard 49 grâce à un déflecteur 55 prévu au voisinage du bord d'amont 50 du regard 49.

Lorsque le regard est rectangulaire, les orifices d'entrée et de sortie d'air s'étendent avantageusement le long des grands côtés du regard 49.

Les orifices de sortie 53,57 ménagés dans la paroi interne 33 du couvercle 31 sont constitués de fentes 59 parallèles entre elles et débouchant dans une partie 60 de la chambre 47, dont la section augmente vers une extrémité du couvercle 31, communiquant avec le conduit 27 dans lequel est monté le ventilateur ou dispositif de succion 26.

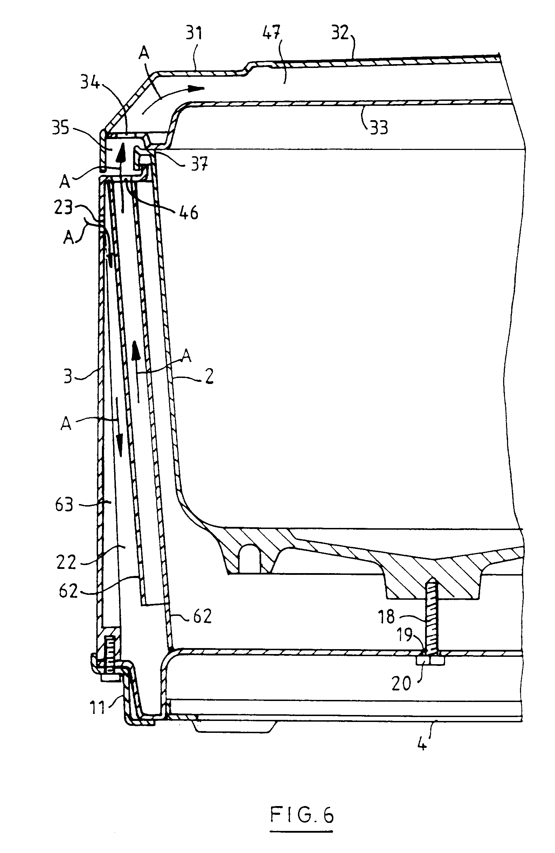

Enfin, la figure 6 est une vue d'une partie d'un appareil de cuisson 1 similaire à celui représenté à la figure 2. Cet appareil de cuisson 1 présente toutefois un ou des orifices 23 ménagés dans l'enveloppe 3 au voisinage du bord 37 et des parois 62 formant des chicanes destinées à diviser la chambre 43 ou à allonger le parcours de l'air (flèches A) dans cette chambre 43.

Cette forme de réalisation permet de refroidir au maximum la partie de l'appareil qui est adjacente au couvercle 31, partie sur laquelle sont montées, de préférence, des poignées (non montrées) de manutention de l'appareil.

Dans cette forme de réalisation de l'invention illustrée à la figure 6, l'enveloppe 3 est également munie d'ailettes 63 dirigées vers l'intérieur de manière à accroître la surface de contact entre l'air et l'enveloppe 3, c'est-à-dire de manière à augmenter le refroidissement de cette enveloppe 3.

Des tests ont été effectués avec l'appareil de cuisson du type représenté à la figure 3.

On a versé un litre d'huile de maïs dans la cuve 2 et on a porté cette huile à une température de 200°C grâce à des résistances électriques montées à la partie inférieure 15 de la cuve 2.

On a ensuite placé 300 g de pommes de terre coupées en bâtonnets dans un panier amovible, tel qu'un panier décrit dans le brevet belge 870.479.

Après avoir refermé le couvercle 31, on a plongé le panier dans l'huile chaude et on a mesuré la température de l'enveloppe au voisinage du bord 37 et du couvercle en son milieu et au voisinage de l'entrée 39 du conduit 27.

On a répété cet essai, après mise en fonctionnement du ventilateur 26.

Le tableau I suivant reprend les températures mesurées lors de ces essais.

| | Températures en °C | |
|---|---|---|
| | avec ventilateur | sans ventilateur |
| enveloppe 3 (rebord 36) | 90 | 100 |
| couvercle 31 (milieu) | 40 | 75 |
| couvercle 31 (entrée 39) | 65 | 80 |

Ce tableau I montre qu'il est possible de réduire de façon appréciable la température du couvercle 31. La chute de température d'environ 35°C du couvercle en son milieu réduit de façon considérable les risques de brûlure de l'utilisateur puisque ce dernier est amené à manipuler régulièrement le couvercle lors de l'utilisation de l'appareil.

On a également remarqué une réduction appréciable de la température de l'enveloppe 3 lors de la mise en fonctionnement du ventilateur 26.

Cette possibilité de réduire par des courants d'air produits par un ventilateur la température de l'enveloppe permet de ne plus devoir entourer cette enveloppe d'isolants thermiques ou de ne plus devoir utiliser des matières telles que des matières plastiques devant résister à de hautes températures.

Il va de soi que l'enveloppe 3 peut également porter des capteurs de températures, de sorte que le ventilateur n'établira un courant d'air entre l'enveloppe et la cuve que lorsqu'un seuil de température sera atteint. Ceci permet, par exemple, de ne pas établir de courant d'air lorsque le liquide de cuisson n'a pas atteint la température souhaitée.

Dans la forme de réalisation du couvercle montré à la figure 5, la paroi 33 peut être réalisée en aluminium tandis que la paroi 32 peut être réalisée en polypropylène. La paroi 33 munie de fentes 59 crée une perte de charge dans le courant de fumées et joue ainsi le rôle d'un préfiltre permettant l'élimination de particules d'huile ou de graisse.

On peut également prévoir un filtre entre les parois 32,33 du couvercle pour éviter tout risque de dépôt de graisse ou d'huile sur les pales du ventilateur.


**Revendications**

1. Appareil de cuisson d'aliments comprenant une cuve (2) destinée à contenir des aliments à cuire dans un liquide et munie d'un couvercle (31), et des moyens (25) pour établir un courant d'air entre un orifice d'entrée et un orifice de sortie que présente l'appareil, caractérisé en ce que le couvercle (31) présente deux parois (32, 33) entre lesquelles est ménagée une chambre (47), lesdits moyens (25) établissant au moins un courant d'air depuis un orifice d'entrée (34) jusqu'à un orifice de sortie (24) de la chambre (47), de manière à abaisser la température du couvercle (31).

2. Appareil suivant la revendication 1, cet appareil comprenant une enveloppe (3) entourant (1) la cuve (2), cette enveloppe (3) étant écartée de ladite cuve (2) de manière à définir une chambre (43) entre la paroi (44) de l'enveloppe (3) et la paroi latérale (45) de la cuve (2), de manière que la chambre (43) définie entre l'enveloppe (3) et la cuve (2) communique par au moins un orifice intermédiaire (46) avec la chambre (47) du couvercle (31), lesdits moyens (25) établissant un courant d'air dans lesdites chambres (43, 47).

3. Appareil suivant la revendication 2, caractérisé en ce que des chicanes (62) sont prévues entre deux parois (44,45 ; 32,33) d'une chambre (31, 47).

4.  Appareil suivant la revendication 2 ou 3, caractérisé en ce qu'au moins une des parois (44,45 ; 32,33) d'une chambre (43,47) est munie d'ailettes (63).

5.  Appareil suivant l'une quelconque des revendications précédentes, caractérisé en ce que la paroi interne (33) du couvercle (31) présente une ouverture (38,57) communiquant avec la chambre (47) du couvercle (31) et en ce que les moyens (25) aspirent de l'air située dans ladite chambre (47) et des fumées (F) dégagées dans la cuve (2) lors de la cuisson d'aliments.

6.  Appareil suivant l'une quelconque des revendications précédentes, comportant un regard (49) présentant un bord d'amont (50) et un bord d'aval (51) opposés l'un à l'autre, caractérisé en ce qu'au moins un orifice d'entrée (52) d'air dans la cuve (2) est prévu au voisinage du bord d'amont (50) du regard (49), tandis qu'au moins un orifice d'évacuation (53) de cet air est ménagé au voisinage du bord d'aval (51) de ce regard (49), de sorte que, sous l'effet des moyens (25) d'établissement d'un courant d'air, une couche d'air se déplace sur une face (54) du regard (49) qui est dirigée vers la cuve (2).

7.  Appareil suivant la revendication 6, caractérisé en ce qu'un déflecteur (55) est prévu au voisinage du bord d'amont (50) du regard (49), du côté de la face (54) de celui-ci dirigée vers la cuve (2), de manière que l'air entre par le ou les orifices d'entrée (52) susdits vers ladite face (54) du regard (49), en léchant cette face (54).

8.  Appareil suivant l'une quelconque des revendications 6 et 7, caractérisé en ce que le regard (49) est porté par une paroi interne (33) du couvercle (31) écartée d'une paroi externe (32) de ce couvercle (31), de telle sorte que la chambre (47) est ménagée dans le couvercle (31) entre ses parois externe (32) et interne (33), le ou les orifices de sortie (53, 57) de l'air introduit dans la cuve (2) étant ménagés dans la paroi interne (33) du couvercle (31).

9.  Appareil suivant la revendication 8, caractérisé en ce que le ou les orifices de sortie (53, 57) sont constitués de fentes (59) parallèles entre elles et débouchant dans une chambre (60) de l'espace (22), cette chambre dirigeant le courant d'air vers une extrémité du couvercle (31), cette extrémité communiquant avec un conduit (27) dans lequel est monté un dispositif de succion (26).

10. Appareil de cuisson suivant la revendication 9, caractérisé en ce qu'un filtre (40, 48) est monté dans le conduit susdit (27) en amont ou en aval du dispositif de succion (26).

11. Appareil de cuisson suivant l'une quelconque des revendications 6 à 9, caractérisé en ce que le regard (49) présente une forme sensiblement rectangulaire, des orifices d'entrée (52) d'air étant adjacents à un des longs côtés du regard (49) et au moins une fente de sortie étant adjacente à l'autre côté du regard (49).

## Patentansprüche

1.  Kochapparat für Nahrungsmittel mit einem mit einem Deckel (31) versehen Behälter (2) zur Aufnahme der in einer Flüssigkeit zu kochenden Nahrungsmittel und mit Einrichtungen (25) zur Erzeugung eines Luftstroms zwischen einer Eintrittsöffnung und einer Austrittsöffnung, die am Apparat vorgesehen sind, dadurch gekennzeichnet, daß der Deckel (31) zwei Wände (32, 33) aufweist, zwischen denen eine Kammer (47) vorgesehen ist, wobei die Einrichtungen (25) mindestens einen Luftstrom von einer Eintrittsöffnung (34) bis zu einer Austrittsöffnung (24) der Kammer (47) erzeugen, sodaß die Temperatur des Deckels (31) abgesenkt wird.

2.  Apparat nach Anspruch 1, wobei dieser Apparat eine den Behälter (2) umgebende (1) Hülle (3) aufweist, welche Hülle (3) sich in einem bestand vom Behälter (2) befindet, sodaß eine Kammer (43) zwischen der Wand (44) der Hülle (3) und der Seitenwand (45) des Behälters (2) derart definiert ist, daß die zwischen der Hülle (3) und dem Behälter (2) definierte Kammer (43) über mindestens eine Zwischenöffnung (46) mit der Kammer (47) des Deckels (31) kommuniziert, wobei die Einrichtungen (25) einen Luftstrom in den Kammern (43, 47) erzeugen.

3. Apparat nach Anspruch 2, dadurch gekennzeichnet, daß Schikanen (62) zwischen zwei Wänden (44, 45; 32, 33) einer Kammer (31, 47) angeordnet sind.

4. Apparat nach Anspruch 2 oder 3, dadurch gekennzeichnet, daß mindestens eine der Wände (44, 45; 32, 33) einer Kammer (43, 47) mit Rippen (63) versehen ist.

5. Apparat nach einem der vorhergehenden Ansprüche, dadurch gekennzeichnet, daß die Innenwand (33) des Deckels (31) eine Öffnung (38, 57) aufweist, die mit der Kammer (47) des Deckels (31) kommuniziert, und daß die Einrichtungen (25) in der Kammer (47) befindliche Luft und im Behälter (2) beim Kochen von Nahrungsmitteln freiwerdenden Rauch (F) absaugen.

6. Apparat nach einem der vorhergehenden Ansprüche mit einem Sichtfenster (49), das einen stromaufwärtigen Rand (50) und einen stromabwärtigen Rand (51) aufweist, die entgegengesetzt zueinander angeordnet sind, dadurch gekennzeichnet, daß mindestens eine Eintrittsöffnung (52) für Luft in den Behälter (2) nahe dem stromaufwärtigen Rand (50) des Sichtfensters (49) vorgesehen ist, während mindestens eine Austrittsöffnung (53) für diese Luft nahe dem stromabwärtigen Rand (51) dieses Sichtfensters (49) vorgesehen ist, sodaß sich unter der Wirkung der Einrichtungen (25) zur Erzeugung eines Luftstroms eine Luftschicht auf einer zum Behälter (2) gerichteten Seite (54) des Sichtfensters (49) bewegt.

7. Apparat nach Anspruch 6, dadurch gekennzeichnet, daß eine Umlenkeinrichtung (55) nahe dem stromaufwärtigen Rand (50) des Sichtfensters (49) auf der zum Behälter (2) gerichteten Seite (54) desselben vorgesehen ist, sodaß die Luft über die Eintrittsöffnung(en) (52) zur Seite (54) des Sichtfensters (49) unter Bestreichen dieser Seite (54) eintritt.

8. Apparat nach einem der Ansprüche 6 und 7, dadurch gekennzeichnet, daß das Sichtfenster (49) an einer Innenwand (33) des Deckels (31) angeordnet ist, die sich in einem Abstand von der Außenwand (32) dieses Deckels (31) befindet, sodaß die Kammer (47) zwischen ihrer Außenwand (32) und Innenwand (33) im Deckel (31) vorgesehen ist, wobei die Austrittsöffnung(en) (53, 57) für die in den Behälter (2) eingeleitete Luft in der Innenwand (33) des Deckels (31) vorgesehen ist/sind.

9. Apparat nach Anspruch 8, dadurch gekennzeichnet, daß die Austrittsöffnung(en) (53, 57) durch zueinander parallele Schlitze (59) gebildet ist/sind, die in eine Kammer (60) des Raumes (22) münden, wobei die Kammer den Luftstrom zu einem Ende des Deckels (31) leitet, welches Ende mit einer Leitung (27) kommuniziert, in der eine Saugeinrichtung (26) angebracht ist.

10. Kochapparat nach Anspruch 9, dadurch gekennzeichnet, daß daß ein Filter (40, 48) in der Leitung (27) oberhalb oder unterhalb der Saugeinrichtung (26) angeordnet ist.

11. Kochapparat nach einem der Ansprüche 6 bis 9, dadurch gekennzeichnet, daß das Sichtfenster (49) eine im wesentlichen rechteckige Form hat, wobei Lufteintrittsöffnungen (52) an eine der Längsseiten des Sichtfensters (49) angrenzen und mindestens ein Austrittsschlitz an die andere Seite des Sichtfensters (49) angrenzt.

## Claims

1. Cooking appliance for foods comprising a vessel (2) intended to contain foods to be cooked in a liquid and provided with a lid (31), and means (25) for establishing a current of air between an inlet opening and an outlet opening of the appliance, characterized in that the lid (31) has two walls (32, 33) between which is located a chamber (47), the said means (25) establishing at least a current of air from an inlet opening (34) up to an outlet opening (24) of the chamber (47) so as to lower the temperature of the lid (31).

2. Appliance according to claim 1, this appliance comprising a housing (3) surrounding (1) the vessel (2), this housing (3) being spaced from the said vessel (2) so as to define a chamber (43) between the wall (44) of the housing (3) and the lateral wall (45) of the vessel (2), so that the chamber (43) defined between the housing (3) and the vessel (2) communicates at least through an intermediate opening (46) with the chamber (47) of the lid (31), the said means (25) establishing a current of air between the said chambers (43, 47).

3. Appliance according to claim 2, characterized in that baffles (62) are located between the two walls (44,45 ; 32,33) of one chamber (31, 47).

4. Appliance according to claim 2 or 3, characterized in that at least one of the walls (44,45; 32,33) of a chamber is provided with fins (63).

5. Appliance according to anyone of the preceding claims, characterized in that the inner wall (33) of the lid (31) has an opening (38, 57) communicating with the chamber (47) of the lid (31) and in that the means (25) extract air located in the said chamber (47) and smokes (F) produced in the vessel (2) during the cooking of foods.

6. Appliance according to anyone of the preceding claims, comprising a sight window (49) having an upstream edge (50) and a downstream edge (51) lying opposite one another, characterized in that at least one opening (52) for the admission of air into the vessel (2) is provided close to the upstream edge (50) of the sight window (49), while at least one opening (53) for the evacuation of this air is provided close to the downstream edge (51) of said sight window (49), so that through the action of the means (25) producing a current of air a layer of air is displaced over a face (54) of the sight window (49) which is directed towards the vessel (2).

7. Appliance according to claim 6, characterized in that a deflector (55) is provided close to the upstream edge (50) of the sight window (49), on the side of that face (54) of the latter which is directed towards the vessel (2) in such a manner that the air enters through the aforesaid inlet opening or openings (52) towards said face (54) of the sight window (49), bathing said face (54).

8. Appliance according to either of claims 6 and 7, characterized in that the sight window (49) is carried by an inner wall (33) of the lid (31), which wall is spaced apart from an outer wall (32) of said lid (31), so that the chamber (47) is formed in the lid (31) between its outer wall (32) and inner wall (33), the outlet opening or openings (53, 57) for the air introduced into the vessel (2) being provided in the inner wall (33) of the lid (31).

9. Appliance according to claim 8, characterized in that the outlet opening or openings (53, 57) are composed of slots (59) parallel to one another and leading into a part (60) of the chamber (22), said chamber directing the current of air towards one end of the lid (31), which end communicates with a duct (27) in which a suction device (26) is mounted.

10. Appliance according to claim 9, characterized in that a filter (40, 48) is mounted in the aforesaid duct (27) upstream or downstream of the suction device (26).

11. Appliance according to anyone of claims 6 to 9, characterized in that the sight window (49) has a substantially rectangular shape, air inlet openings (52) being adjacent to one of the long sides of the sight window (49) and at least one outlet slot being adjacent to the other side of the sight window (49).

FIG. 1

FIG. 2

FIG. 3

FIG. 4

# FIG. 5

EP 0 343 141 B1

FIG. 6